(19) Europäisches Patentamt European Patent Office Office européen des brevets

(11) **EP 3 074 783 B1**

(12) **FASCICULE DE BREVET EUROPEEN**

(45) Date de publication et mention de la délivrance du brevet:
**21.10.2020 Bulletin 2020/43**

(21) Numéro de dépôt: **14802892.1**

(22) Date de dépôt: **26.11.2014**

(51) Int Cl.:
***G01S 3/802*** (2006.01)

(86) Numéro de dépôt international:
**PCT/EP2014/075624**

(87) Numéro de publication internationale:
**WO 2015/078895 (04.06.2015 Gazette 2015/22)**

(54) **SYSTEME ET PROCEDE DE LOCALISATION D'EMISSIONS SONAR INTERCEPTEES**

SYSTEM UND VERFAHREN ZUR ORTUNG AUFGEFANGENER SONARÜBERTRAGUNGEN

SYSTEM AND METHOD FOR LOCATING INTERCEPTED SONAR TRANSMISSIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2013 FR 1302780**

(43) Date de publication de la demande:
**05.10.2016 Bulletin 2016/40**

(73) Titulaire: **THALES**
**92400 Courbevoie (FR)**

(72) Inventeur: **PILLON, Denis**
**83140 Six-Fours-les-Plages (FR)**

(74) Mandataire: **Marks & Clerk France**
**Immeuble "Visium"**
**22, avenue Aristide Briand**
**94117 Arcueil Cedex (FR)**

(56) Documents cités:
**AU-A1- 2011 265 390      AU-B2- 784 786**
**FR-A1- 2 504 275**

## Description

### Domaine de l'invention

L'invention concerne de manière générale les sonars passifs, et en particulier un système et un procédé de localisation des émissions interceptées par de tels sonars.

### Art antérieur

Les sonars passifs, notamment ceux équipant les sous-marins, sont dotés d'une fonction d'interception sonar (IS) prévue pour détecter, identifier et localiser les impulsions émises par les sonars actifs qu'elles soient d'origine électroacoustique ou naturelle (biologiques).

La fonction d'interception sonar permet de déterminer la distance de l'émetteur qui représente une information importante sur le plan tactique. En effet, une telle information permet par exemple d'évaluer le risque d'avoir été détecté par le sonar actif adverse et de savoir si cette menace est à portée de tir d'arme (torpille lourde, missile à changement de milieu). La mesure de la distance permet également de déterminer la cinématique de la source et ainsi d'apporter des éléments contribuant à la classification de l'équipement adverse: par exemple, un élément de la faune sous-marine n'aura pas éventuellement la même vitesse de déplacement qu'un sonar actif biomimétique de sous-marin. Enfin, face à une torpille attaquante en mode actif, la mesure de la distance permet de déployer efficacement des contre-mesures adaptées.

Il existe une pluralité de méthodes permettant au sous-marinier d'assurer cette fonction de localisation instantanée en interception telles que la triangulation, la télémétrie par trajets multiples, l'utilisation de la mesure du niveau, ou encore l'exploitation de la courbure du front d'onde (CFO).

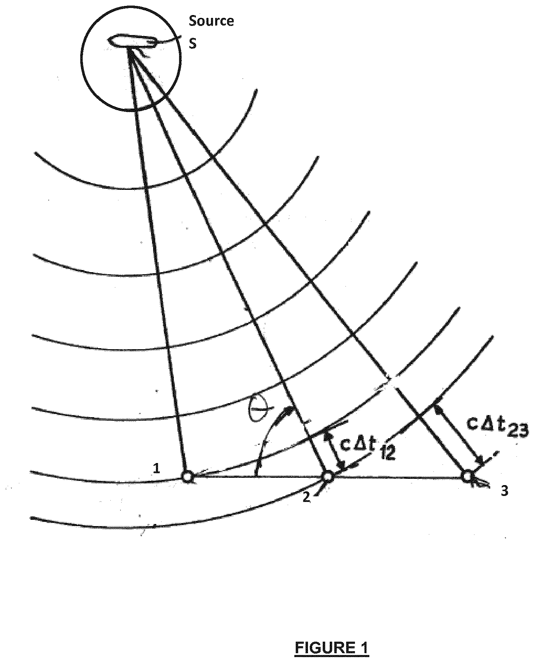

Les systèmes d'interception d'émissions sonars basés sur l'exploitation de la courbure du front d'onde (CFO) existants comprennent des télémètres par CFO qui utilisent 3 antennes distribuées, installées sur chaque bord des sous-marins. La figure 1 illustre le schéma de principe de la CFO par mesure de retards. En supposant le problème plan, sachant que par trois points ne passe qu'un seul cercle, deux mesures de retards inter-panneaux peuvent être effectuées pour calculer le gisement et la distance de la source S à l'aide de formules analytiques simples issues de la géométrie élémentaire.

Plus précisément, la méthode de localisation par CFO est basée sur la mesure de retards entre trois hydrophones (ou petits panneaux) supposés parfaitement alignés : un capteur avant (capteur 1), un capteur central (capteur 2) et un capteur arrière (capteur 3). A partir des signaux provenant de chacun de ces trois capteurs, trois instants d'arrivés ($t_1$, $t_2$, $t_3$) sont estimés. Ces instants sont ensuite utilisés pour estimer deux temps de retards inter-panneaux $\Delta t_{12}$ et $\Delta t_{23}$ selon les formules suivantes :

- $\Delta t_{12} = t_1 - t_2$ pour les panneaux 1 et 2 ;

- $\Delta t_{23} = t_2 - t_3$ pour 2 et 3.

Les temps de retard inter-panneaux correspondent aux écarts de distances parcourues par les rayons sonores:
$\Delta d_{ij} = \Delta t_{ij}.c$ avec c, la célérité du son dans l'eau qui est supposée connue.
Les deux mesures de temps de retards inter-panneaux $\Delta t_{12}$ et $\Delta t_{23}$ permettent de calculer le gisement et la distance de la source à l'aide de formules analytiques comme décrit par exemple dans Qihu Li, «Digital Sonar design in underwater acoustics», Springer Verlag 2012. Un exemple de méthode de localisation basée sur des mesures de retard et d'inter-corrélation est décrit dans AU 2011 265 390.

Pour le procédé CFO-IS, la précision de la localisation est souvent pénalisée par la mauvaise qualité des mesures d'instants $t_i$ alors même que ces mesures doivent être très précises (de l'ordre de la $\mu$s).

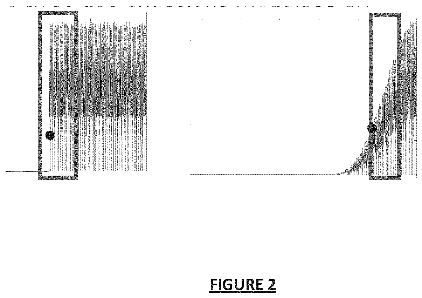

Un tel procédé comprend deux étapes pour mesurer le retard inter-panneau. La première étape consiste, à partir du signal temporel issus des 3 capteurs, à estimer grossièrement les 3 instants d'arrivée du front de montée du pulse intercepté grâce à un seuillage. Cependant, ce front est souvent insuffisamment raide pour permettre des mesures justes et reproductibles comme illustré sur la figure 2. Une telle montée non-franche du signal peut-être due :

- Au canal de propagation si sa réponse impulsionnelle est temporellement étalée ;
- A la fonction de transfert du canal hydroponique ;
- A la modulation d'amplitude utilisée par le sonar actif adverse pour améliorer certaines de ses performances ou aux limitations de l'électronique d'émission et des transducteurs (bande passante) ; ou
- à la perturbation provoquée par d'autres signaux impulsifs parasites simultanément présents (brouilleurs, bruits biologiques, chocs, etc.).

Il en résulte un manque de robustesse des mesures effectuées.

La seconde étape correspond à la mesure de retard fin qui s'effectue par inter-corrélation sur toute ou une partie de la durée du pulse, comme illustré dans US N° 3978445. Une telle mesure nécessite que l'émission adverse ait une bande fréquentielle importante, ce qui n'est pas toujours le cas (impulsion de fréquence pure). Les résultats obtenus sur des signaux réels sont alors insuffisants. D'autre part, la présence de trajets multiples, notamment de réfléchis surface perturbe le pic de corrélation et, par là même, celle de la mesure des retards inter-panneaux.

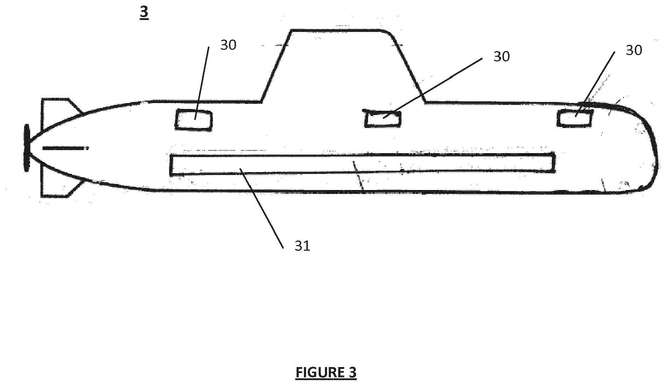

Par ailleurs, un tel procédé nécessite l'installation de plusieurs antennes distribuées. Or les panneaux d'antenne distribuée (30) doivent être généralement installés sur le sous-marin (3) en complément d'une antenne de Flanc (31), comme illustré sur la figure 3. De plus, le montage de telles antennes doit se faire de façon très précise, ce qui entraîne un surcoût important.

## Définition générale de l'invention

L'invention vient améliorer la situation. A cet effet, elle propose un système de localisation d'impulsion sonar tel que défini dans les revendications indépendantes 1 et 15. Des caractéristiques complémentaires sont définies dans les revendications dépendantes 2 à 14.

L'invention fournit ainsi une solution robuste de localisation en distance des Interceptions Sonar. L'utilisation combinée des deux antennes colinéaires permet de déterminer la distance de l'émetteur par focalisation dans la direction de l'émission interceptée, sans qu'il soit nécessaire d'utiliser plusieurs antennes distribuées comme dans l'art antérieur.

Les deux antennes nécessitent un nombre de capteurs limité et génèrent donc un encombrement réduit, ce permet d'intégrer facilement le système proposé aux modules acoustiques d'une antenne de flanc ou d'une antenne linéaire remorquée (encore appelée « flûte »).

L'invention fournit ainsi un moyen passif pour déterminer la distance de l'émetteur afin par exemple d'évaluer le risque d'avoir été détecté par un sonar actif adverse ou de déterminer la cinématique de la source.

## Description des figures

D'autres caractéristiques et avantages de l'invention apparaîtront à l'aide de la description qui suit et des figures des dessins annexés dans lesquels:

- La figure 1 illustre le schéma de principe de la CFO par mesure de retard ;

- La figure 2 illustre l'effet de la raideur des fronts de montées sur l'incertitude de la mesure ;

- La figure 3 montre le montage des antennes distribuées sur un sous-marin;

- La figure 4 est un schéma représentant le système d'interception sonar selon une forme de réalisation ;

- La figure 5 est un schéma représentant le système d'interception sonar selon une autre forme de réalisation ;

- La figure 6 est un diagramme de directivité en gisement et inverse de la distance d'une antenne à 3 capteurs ;

- La figure 7 représente une antenne de flanc intégrant une antenne de focalisation et une antenne de détection selon un mode de réalisation ;

- La figure 8 est un schéma représentant la formation de voie focalisée ; et

- La figure 9 est un organigramme représentant le procédé de localisation d'impulsion d'interception sonar selon une forme de réalisation.

Les dessins et les annexes à la description pourront non seulement servir à mieux faire comprendre la description, mais aussi contribuer à la définition de l'invention, le cas échéant.

## Description détaillée

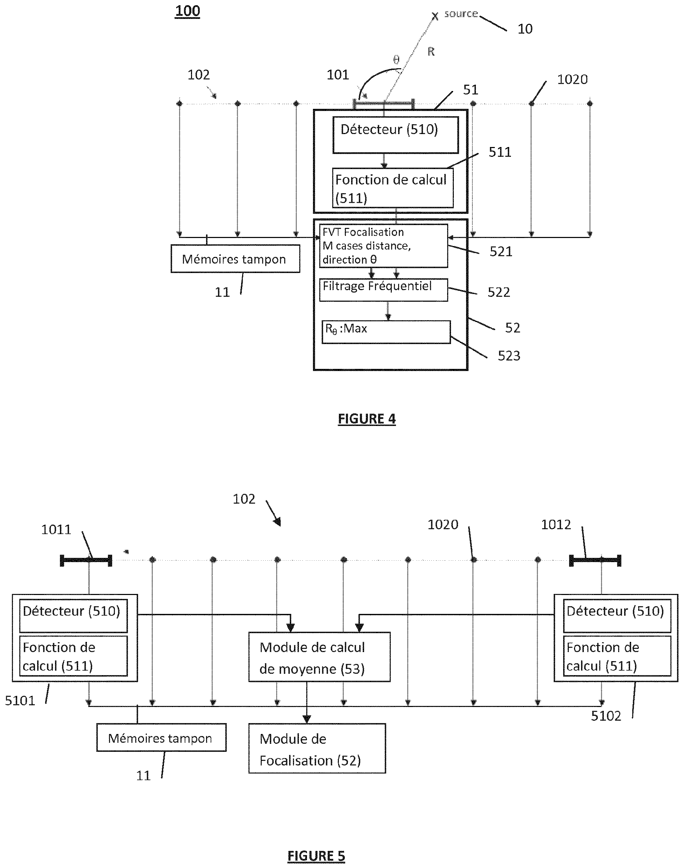

La figure 4 représente un système de localisation d'interception sonar 100 constitué de deux antennes 101-102, agencées sur un sous-marin, de formes générales linéaires et sensiblement parallèles entre elles. Les deux antennes 101 et 102 comprennent chacune un ensemble de capteurs (tels que 1020 pour l'antenne 102).

Selon un aspect de l'invention, la première antenne 101 (encore appelée ci-après « antenne de détection » ou « antenne DET ») est configurée pour intercepter des émissions sonar (IS) émises par une source 10 (encore appelée « émetteur»), et est utilisée pour déterminer la direction de ces émissions interceptées. Selon un autre aspect de l'invention, la deuxième antenne 102 (encore appelée ci-après « antenne de focalisation» ou « antenne FOC ») est utilisée pour déterminer la distance de l'émetteur 10 par focalisation des voies à partir des signaux issus de ses capteurs (1020), dans la direction de l'émission interceptée.

L'antenne de détection (101) est avantageusement de petite dimension par rapport à la longueur de la deuxième antenne (102).

En particulier, la longueur de la première antenne 101 peut être inférieure à 20 $\lambda$, et peut être comprise notamment entre 5$\lambda$ et 20$\lambda$, où $\lambda$ désigne la longueur d'onde du signal intercepté.

Par ailleurs, la longueur de la deuxième antenne 102 peut être choisie strictement supérieure à 200 A.

Selon une caractéristique de l'invention, l'antenne de détection 101 est bien échantillonnée spatialement. En particulier, la distance inter-capteur de la première antenne 101 peut être strictement inférieure à $\lambda$/2 pour obtenir un bon échantillonnage spatial.

Selon une autre caractéristique de l'invention, l'antenne de focalisation 102 peut être sous échantillonnée spatialement. En particulier, la distance inter-capteur de l'antenne de focalisation 102 peut être strictement supérieure à $\lambda$ pour obtenir un sous-échantillonnage spatial.

L'invention utilise ainsi la formation de voies focalisées (c'est-à-dire en prenant en compte la forme cir-

5 EP 3 074 783 B1 6

culaire du front d'onde) réalisée par l'antenne de focalisation 102 pour localiser les émissions sonar interceptées, sans qu'il soit nécessaire d'utiliser des mesures de retard entre trois antennes montées sur le sous-marin comme dans les solutions antérieures.

Selon un aspect de l'invention, l'antenne de focalisation 102 est une antenne de forme linéaire comprenant un ensemble de capteurs 1020 de type hydrophones. Avantageusement, l'antenne 102 de forme linéaire peut comprendre un nombre limité de capteurs, comme par exemple quelques dizaines d'hydrophones, ce qui la rend spatialement sous-échantillonnée. Pour éviter qu'une telle lacunarité n'entraîne l'apparition d'ambiguïtés en gisement et en distance, l'antenne de détection 101 est utilisée conjointement avec l'antenne de focalisation 102.

Plus précisément, le système de localisation d'Interception Sonar 100 met en oeuvre, préalablement à l'étape de focalisation, une étape de détection de l'impulsion sonar à l'aide du petit tronçon d'antenne 101 spatialement bien échantillonné qui permet de déterminer sans ambiguïté la direction de l'impulsion interceptée. Les voies focalisées permettant de déterminer la distance de l'émetteur ne sont alors formées que dans la direction fournie par la détection, ce qui permet d'éviter les ambiguïtés perturbatrices.

La formation de voies focalisées pour localiser de la source de l'émission rend ainsi la mesure robuste sans qu'il soit nécessaire de doter l'antenne de focalisation 102 d'un grand nombre de capteurs. Cela permet ainsi de couvrir des fréquences élevées qui doivent être prises en compte dans les fonctions d'interception (par exemple supérieures à 20 kHz).

Le système de localisation d'interception sonar 100 permet ainsi d'assurer la robustesse de la localisation en distance des Interceptions Sonars. Par ailleurs, les deux antennes 101 et 102 peuvent être facilement intégrées aux modules acoustiques d'une antenne de flanc ou d'une antenne linéairement remorquée.

Les deux antennes, l'une courte pour la détection 101, l'autre longue pour la localisation par focalisation 102, peuvent être obtenues en utilisant des capteurs appartenant à la couverture hydrophonique des antennes de flanc ou une antenne linéairement remorquée. L'invention permet ainsi de donner une fonction de localisation à ces deux types d'antenne, sans qu'il soit nécessaire d'installer des antennes distribuées.

Comme représenté sur la figure 4, le système de localisation d'interception sonar 100 comprend un premier module d'interception 51 pour détecter les impulsions, comprenant un détecteur 510 et une fonction de mesure des caractéristiques de l'impulsion détectée 511. Le premier module 51 est configuré pour traiter les informations provenant de l'antenne 101. En particulier, le détecteur 510 est propre à détecter les impulsions dans le champ de veille de l'antenne 101, tandis que la fonction de mesure 511 est configurée pour mesurer la direction et les paramètres de l'impulsion à partir des impulsions détectées.

Le système de localisation d'interception sonar 100 comprend en outre un second module de formation de voies focalisées 52 (encore appelé « module de focalisation ») pour réaliser une formation de voies focalisées dans la direction fournie par le module 51 en exploitant l'antenne de focalisation 102. La focalisation de voie est réalisée postérieurement à la détection mise en oeuvre par le module 51. Les signaux issus de l'antenne 102 sont mis en mémoire tampon 11 (« bufferisés ») pour être utilisés par le module de focalisation 52. La mesure de la distance de la source est alors obtenue en recherchant le maximum d'énergie dans la bande de l'IS (Interception Sonar) sur toutes les cases distance (521, 522, 523).

Le système de localisation d'émissions sonar interceptés 100 selon les modes de réalisation de l'invention présente notamment des capacités mémoires suffisantes pour buffériser les signaux hydrophoniques de l'antenne 102 pendant la phase de détection mise en oeuvre par le module 51.

Le module 51 peut délivrer les paramètres suivants qui pourront être utilisés par le module 52:

- un gisement de détection ;
- un instant de début et de fin de l'IS ; et
- la bande de fréquence de l'impulsion interceptée et sa fréquence centrale.

L'homme du métier comprendra aisément que l'antenne 101 comprend également des éléments de détections et de mesures élémentaires standards à toute fonction d'IS (non représentés).

Dans la forme de réalisation de la figure 4, les deux antennes 101 et 102 sont sensiblement linéaires et parallèles entre elles. Elles peuvent être notamment agencées de sorte que l'antenne de détection 101 soit sensiblement à proximité de l'antenne de focalisation 102 afin d'éviter les effets de parallaxe. En particulier, comme montré sur la figure 4, les deux antennes 101 et 102 peuvent être sensiblement alignées selon un même axe.

Dans la forme de réalisation de la figure 4, l'antenne de détection 101 comprend un seul tronçon qui peut être placé sensiblement au niveau du centre de l'antenne de focalisation 102.

En variante, comme représenté sur la figure 5, l'antenne de détection 101 peut comprendre deux tronçons 1011 et 1012 à chaque extrémité de l'antenne de focalisation 102.

Le module 51 comprend alors deux modules auxiliaires d'interception 5101 et 5102, chacun étant associé à l'un des tronçons 1011 et 1012, ce qui fournit deux mesures d'angle. Chaque module auxiliaire d'interception 5101 et 5102 comprend un détecteur 510 et une fonction de calcul 511 comme décrits ci-avant. Dans cette forme de réalisation, le module 51 comprend également un module de calcul de moyenne 53 configuré pour déterminer la moyenne des 2 angles issus des modules

4

auxiliaires d'interception 5101 et 5102. Cette moyenne est ensuite envoyée au module de formation de voies focalisées 52 comme décrit précédemment. De telles géométries permettent d'intégrer aisément le procédé de localisation dans des antennes de flanc ou des antennes linéaires remorquées.

Selon une caractéristique particulière de l'invention, la largeur du secteur angulaire traité par l'antenne 101 est choisie telle qu'il n'y ait pas de pics d'ambigüités en angles et en distance qui apparaissent dans ce secteur angulaire.

En effet, la position en distance des ambigüités pour une antenne linéaire à capteurs équirépartis et pour un gisement dans la direction de la source peut être déterminée à partir de l'équation 1 ci-dessous :

$$\frac{1}{R_k} = \frac{1}{R_0} + \frac{k}{f} \times \frac{2c}{d^2 \sin^2 \theta_0} \quad \text{(Equation 1)}$$

Dans l'équation 1,

- $R_0$ et $\theta_0$ désignent les coordonnées polaires de la source par rapport au centre de l'antenne 101 ;
- $R_k$ désigne la distance de la $k^{\text{ième}}$ ambigüité dans la direction de la source ;
- c désigne la célérité, et
- d désigne la distance inter-capteurs (encore appelé « pas d'antenne ») de l'antenne 101.

En introduisant le paramètre $d_f$ qui représente la distance de Fresnel correspondant à d, l'équation 1 peut être exprimée comme suit :

$$\frac{1}{R_k} = \frac{1}{R_0} + \frac{2k}{d_f} \quad \text{(Equation 2)}$$

La distance Fresnel $d_f$ est donnée par l'équation 3 ci-après :

$$d_f = (d \sin \theta)^2 / \lambda \quad \text{(Equation 3)}$$

Dans l'équation (3), d désigne le pas inter-capteur, θ désigne le gisement, c'est-à- dire la direction incidente prise par rapport à l'avant du sous-marin, les angles étant comptés positivement dans le sens horaire, et désigne la longueur d'onde soit c/f où f désigne la fréquence du signal intercepté.

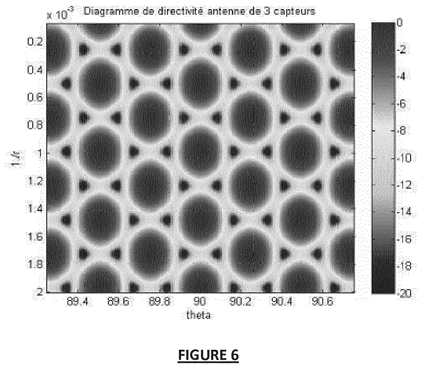

Ainsi, les ambigüités en distance dépendent du pas d'antenne et non de la longueur L de l'antenne. Les ambigüités spatiales liées au sous-échantillonnage de l'antenne de focalisation 102 ont pour effet de multiplier le nombre d'ambigüités en distance. Par exemple, sur le diagramme de directivité de la figure 6 obtenue pour le cas de 3 capteurs (ou panneaux), pour un gisement de 90°, des maxima locaux dans la direction de la source sont observés. De plus, dans d'autres directions, il peut être observé des lobes images (ambigüités) en quinconces.

Les représentations des distances sur la figure 6 sont en 1/R, ratio qui correspond à la grandeur "naturelle" (i.e. physique) du problème (R est en mètre).

Il existe deux familles d'ambigüités, l'une correspondant aux ambigüités spatiales données par $\sin(\theta_1) = \sin(\theta_2) + k.\lambda/d$, et l'autre correspondant aux ambigüités en distance entre ces directions et en quinconce (en 1/R) pour le cas d'un nombre impair de capteurs.

Pour une source en direction $\theta_I$, l'ambigüité la plus proche en angle se trouve à la direction : $\sin(\theta_1) = \sin(\theta_2) + \lambda/d$. Par conséquent, les ambigüités angulaires peuvent être levées par la détermination de la direction fournie par l'antenne de détection 101. En particulier, l'antenne de détection 101 peut être choisie de manière à avoir un lobe suffisamment fin pour obtenir une précision meilleure que $\Delta\theta_{12} = |\theta_1 - \theta_2|$ (avec la largeur du lobe à 3db telle que $2\theta_3 < \Delta\theta_{12}$). En particulier, l'antenne de détection 101 peut être choisie de manière à avoir un lobe suffisamment fin. Par exemple, une antenne de détection 101 sensiblement égale à environ 40 cm peut être suffisante pour obtenir les performances souhaitées au-dessus de 10kHz (ou 15 kHz).

En général, pour pouvoir bien échantillonner spatialement une antenne de grande longueur (supérieure à 50 mètres) telle que l'antenne de focalisation 102, il est nécessaire d'utiliser un nombre de capteurs élevé de plusieurs milliers par bord, ce qui est difficilement réalisable en pratique. Il convient également de noter la valeur très faible de l'ouverture du lobe principal donnée par la formule $2\theta_3 = 50°\lambda/(kd)$. Par suite, un traitement de focalisation avec une telle antenne ne peut être effectué de façon panoramique car le nombre de voies à former serait trop important (plusieurs dizaine de milliers).

Cependant, le choix du nombre de capteurs est lié à la présence d'ambigüités dans le plan gisement-distance lorsque les capteurs sont équirépartis avec un espacement nettement supérieur à $\lambda/2$. En levant les ambigüités, le système d'interception 100 selon l'invention permet alors d'utiliser un nombre relativement faible de capteurs pour l'antenne 102 de grande dimension (par exemple quelques dizaines de capteurs seulement), avec un espacement > À.

Selon un aspect de l'invention, l'antenne de détection 101 peut se présenter sous la forme d'une antenne linéaire munie de capteurs équirépartis et correctement échantillonnés spatialement. Par exemple, si l'antenne 101 a une longueur de 40cm, l'antenne pourra être équipée de 24 hydrophones selon un pas de 17 mm pour couvrir les fréquences jusqu'à 45 kHz.

L'antenne de détection 101 et l'antenne de focalisation 102 peuvent être installées dans des modules acoustiques d'un équipement du sonar (encore appelé ensemble acoustique), tel qu'une antenne de flanc par exemple.

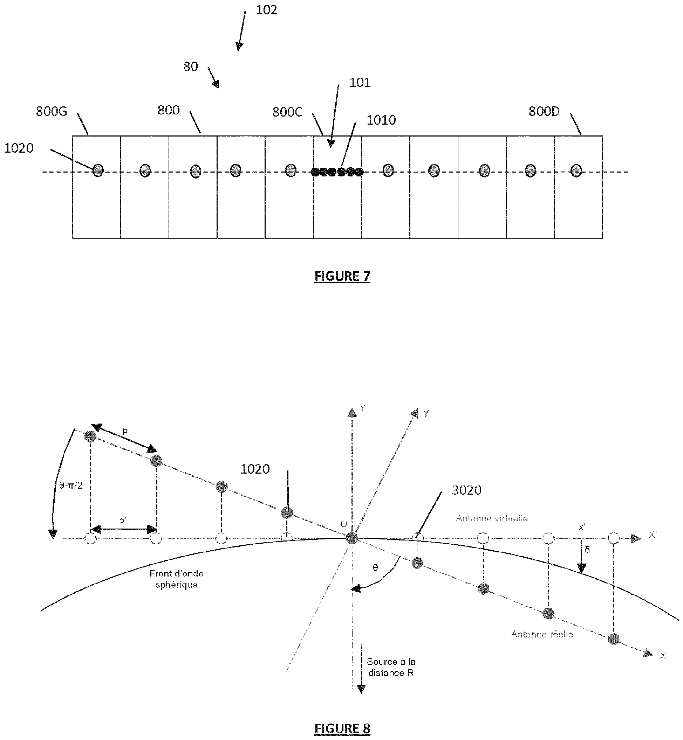

La figure 7 représente une antenne de flanc 80 dans laquelle sont installées l'antenne de détection 101 et l'antenne de focalisation 102.

L'antenne de flanc 80 peut avoir une forme générale rectangulaire et comprendre un ensemble de modules acoustiques alignés 800, et placés côte à côte.

Comme représenté, l'antenne de focalisation 102 comprend un ensemble de capteurs spécifiques d'interception 1020 (qui couvre les gammes de fréquences de l'interception), chacun installé dans le module acoustique 800 respectif de l'antenne de flanc 80 comme représenté sur la figure 7. Par ailleurs, dans la forme de réalisation où l'antenne de détection 101 est formée d'un seul tronçon constitué de petits capteurs rapprochés 1010, l'antenne 101 peut être également installée dans l'un des modules acoustiques de l'antenne de flanc, par exemple le module acoustique central 800C. L'un des capteurs 1010 de l'antenne 101 peut être utilisé conjointement par l'antenne 102. En variante, dans la forme de réalisation, où l'antenne 101 est constituée de 2 tronçons distincts, chaque tronçon 1011 ou 1012 peut être constitué de petits capteurs rapprochés et être installé dans un module acoustique respectif à chaque extrémité de l'antenne de flanc (par exemple les modules acoustiques 800G et 800D).

Dans une variante de réalisation de l'invention, il est possible de placer les antennes 101 et 102 de manière similaire dans une antenne linéaire remorquée.

L'homme du métier comprendra que l'antenne 101 peut être installée dans un ensemble acoustique distinct de celui dans lequel est installée l'antenne 102. Par exemple l'antenne 101 pourrait être montée sur la coque du sous-marin ou son massif tandis que l'antenne 102 est installée dans une antenne de flanc.

La figure 8 est un schéma illustrant la focalisation de voie, selon un exemple de réalisation de l'invention.

Dans l'étape de focalisation, les signaux provenant d'une ligne d'hydrophones (1020) qui peuvent être placés au milieu, en haut ou en bas de chaque module peuvent être exploités. Pour cela, une tranche temporelle de signal est déterminée par les informations de début et de fin d'impulsion estimées par le module 51. Sur cette tranche temporelle de signal, la focalisation des voies dans un secteur angulaire fin autour de la direction de l'IS détectée est ensuite effectuée.

Pour une antenne linéaire, la focalisation peut être réalisée en deux étapes afin de recréer une antenne virtuelle « adaptée » à la direction de pointage (direction de l'émission sonar interceptée), c'est-à-dire une antenne dont l'axe X' formé par les capteurs est perpendiculaire à la direction de pointage Y', comme représenté sur la figure 8. L'antenne réelle 102 comportant les hydrophones 1020 correspond aux axes X et Y, équirépartis selon un pas p. Les éléments 3020 de l'antenne virtuelle sont espacés d'un pas p'.

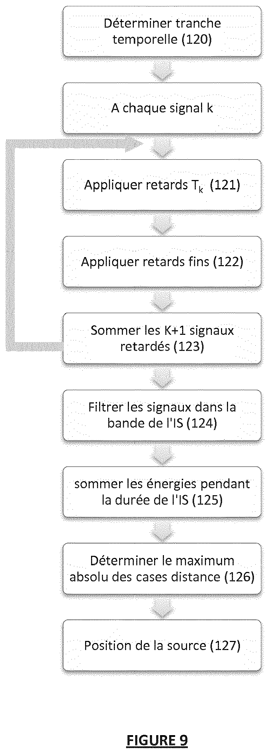

La figure 9 est un organigramme illustrant le procédé de focalisation selon une forme de réalisation de l'invention.

A l'étape 120, la tranche temporelle de signal sur laquelle est effectuée la focalisation des voies est déterminée par les informations de début et de fin d'impulsion estimées par le module 51.

A l'étape 121, des retards Tk dits « grossiers » sont tout d'abord appliqués aux K+1 signaux temporels (préalablement mis en mémoire tampon) issus des hydrophones 1020 selon l'équation suivante :

$$T_k = k.p.\cos\theta / c \qquad \text{(Equation 4)}$$

Dans l'équation 4, le paramètre k désigne le numéro du capteur allant de - K/2 à + K/2 (antenne de K+1 hydrophones avec K pair) et le paramètre p désigne la distance inter-capteurs réelle de l'antenne de focalisation 102.

Le retard « fin » $\delta_k$ correspondant à la courbure seule est ensuite appliqué à chaque signal issu d'un hydrophone selon la formule suivante :

$$\delta_k \approx -P_k'^2 / (2Rc) \qquad \text{(équation 5)}$$

Le retard fin $\delta_k$ est ensuite ajouté au retard grossier Tk.

Dans l'équation 5, les paramètres $P_k' = kp.\sin(\theta)$ et R représentent la distance de focalisation, et c représente la célérité du son.

Pour ces deux opérations, les signaux temporels échantillonnés peuvent être interpolés pour correspondre au mieux aux retards réels.

Les K+1 signaux ainsi retardés sont ensuite sommés à l'étape 122, puis filtrés à l'étape 124 dans la bande de fréquence de l'interception de l'IS.

Le signal obtenu est mis au carré et le résultat est sommé durant la durée de l'impulsion sonar, à l'étape 125. Un ensemble de points dans l'espace distance/angle est ainsi calculé. Le maximum absolu de cette zone angulaire qui correspond à l'estimation de la position de la source (maximum absolu des points calculés) peut être alors affiné par interpolation, à l'étape 126, ce qui permet d'obtenir la mesure utile qui est la distance de l'émetteur.

L'invention permet ainsi d'utiliser la formation de voies focalisées dans le traitement FOC-IS, dans les gammes de fréquences utiles en interception (c'est-à-dire au-delà de 10 à 15 kHz) sans qu'il soit nécessaire d'utiliser une antenne dotée de plusieurs milliers de capteurs spécifiques et de traitements demandant une puissance de calcul importante. Le système d'IS 100 peut ainsi utiliser une antenne très lacunaire comportant quelques dizaines d'hydrophones seulement, ce qui rend aisément réalisable un télémètre utilisant le procédé selon les formes de réalisation de l'invention.

Comme la focalisation impose des retards, la robustesse à raideur du front de montée et aux impulsions en fréquence pure (FP) est assurée. De plus, hormis dans un secteur angulaire étroit sur le travers, la séparation des trajets multiples (réfléchis fond et/ou réfléchi surface) est obtenue "naturellement" par l'effet des pseudo-gisements comme pour toute antenne linéaire. Le système proposé par l'invention permet en outre de rejeter les brouilleurs, s'ils n'apparaissent pas au même instant à la même fréquence, dans une case distance-gisement appropriée par rapport à l'IS d'intérêt et ce durant la majeure partie de la durée de l'impulsion.

Par ailleurs, pour certain cas de déformée et de perturbation de l'acoustique de l'antenne de FOC, le biais de mesure de distance est moins important qu'avec les 3 capteurs utilisés dans les CFO-IS conventionnels.

L'invention n'est pas limitée aux modes de réalisation décrits ci-avant à titre d'exemple non limitatif. Elle englobe toutes les variantes de réalisation qui pourront être envisagées par l'homme du métier. En particulier, l'invention n'est pas limitée aux formes schématiques d'antenne 101 et 102 illustrées sur les dessins, ni aux configurations relatives entre l'antenne de détection 101 et l'antenne de focalisation 102 représentées sur les dessins. De manière générale, l'invention est adaptée à tout type d'antenne de forme générale linéaire pour les antennes 101 et 102, et à tout positionnement relatif des antennes 101 et 102 sur le sous-marin tel que les antennes 101 et 102 soient sensiblement parallèles entre elles. Elle n'est pas non plus limitée à des ensembles acoustiques particuliers pour loger les antennes 101 et 102.

**Revendications**

1. Système de localisation d'impulsion sonar (100) pour un sous-marin, **caractérisé en ce qu'**il comprend :

   - deux antennes de forme générale linéaire (101, 102) agencées sur le sous-marin, les deux antennes comprenant une antenne de détection (101) comprenant un ou deux tronçons, chaque tronçon comprenant un ensemble de capteurs, et une antenne de focalisation (102) comprenant un ensemble de capteurs, l'antenne de détection (101) étant de petite dimension par rapport à la longueur de la deuxième antenne (102), l'antenne de détection (101) étant alignée avec l'antenne de focalisation (102), l'antenne de détection (101) étant configurée pour intercepter des impulsions sonar émises par un émetteur (10), l'espacement des capteurs de chaque tronçon de l'antenne de détection (101) étant strictement inférieur à $\lambda/2$ et l'espacement des capteurs de l'antenne de focalisation (102) étant strictement supérieur à $\lambda$, A désignant la longueur d'onde d'une impulsion interceptée,

   - au moins un module d'interception (51) pour déterminer la direction d'une impulsion sonar émise par l'émetteur et interceptée par l'antenne de détection (101), et
   - un module de focalisation (52) pour déterminer la distance de l'émetteur par focalisation des voies à partir des signaux issus des capteurs de l'antenne de focalisation (102), dans la direction de l'impulsion déterminée par le module de détection (101),

   la focalisation des voies étant réalisée sur une tranche temporelle de signal déterminée à partir du début et de la fin de l'impulsion dans un secteur angulaire autour de la direction de l'impulsion, la distance de l'émetteur étant déterminée à partir d'un maximum d'énergie intégrée dans la bande de fréquences et sur la durée de l'impulsion Sonar, pour des points dans l'espace distance/angle.

2. Système de localisation d'impulsion sonar (100) selon l'une des revendications précédentes, **caractérisé en ce que** la longueur de la première antenne (101) est strictement inférieure à $20\lambda$, où A désigne la longueur d'onde du signal intercepté.

3. Système de localisation d'impulsion sonar (100) selon la revendication 2, **caractérisé en ce que** la longueur de la deuxième antenne (102) est strictement supérieur à $200\lambda$, où A désigne la longueur d'onde du signal intercepté.

4. Système de localisation d'impulsion sonar (100) selon l'une des revendications précédentes, **caractérisé en ce que** l'antenne de détection (101) comprend un tronçon unique, associé à un module unique d'interception (51).

5. Système de localisation d'impulsion sonar (100) selon la revendication 4, **caractérisé en ce que** l'antenne de détection (101) est située sensiblement au centre de l'antenne de focalisation (102).

6. Système de localisation d'impulsion sonar (100) selon l'une des revendications 1 à 3, **caractérisé en ce que** l'antenne de détection (101) comprend deux tronçons (1011, 1012) situés à une distance donnée l'un de l'autre, et **en ce que** le module d'interception (51) comprend deux modules d'interception auxiliaires (5101, 5102) fournissant chacun une mesure d'angle correspondant au tronçon d'antenne associé, et un module de calcul de moyenne (53) configuré pour déterminer la moyenne des 2 mesures d'angles issus des modules auxiliaires d'interception (5101 et 5102).

7. Système de localisation d'impulsion sonar (100) selon la revendication 6, **caractérisé en ce que** chaque tronçon de l'antenne de détection (101) est située sensiblement à une extrémité de l'antenne de focalisation (102).

8. Système de localisation d'impulsion sonar (100) selon l'une des revendications précédentes 4 7 **caractérisé en ce que** chaque module d'interception associé à un tronçon de l'antenne (101) comprend un détecteur (510) configuré pour détecter les impulsions dans le champ de veille du tronçon de l'antenne associé (101) et une fonction de mesure des caractéristiques de l'impulsion détectée (511).

9. Système de localisation d'impulsion sonar (100) selon la revendication 8, **caractérisé en ce que** la fonction de mesure (511) de chaque module d'interception est configurée pour mesurer la direction et les paramètres de l'impulsion à partir des impulsions détectée.

10. Système de localisation d'impulsion sonar (100) selon l'une des revendications précédentes, **caractérisé en ce que** l'antenne de détection (101) et l'antenne de focalisation (102) sont intégrées dans les modules acoustiques d'un même ensemble acoustique.

11. Système de localisation d'impulsion sonar (100) selon la revendication 10, **caractérisé en ce que** l'ensemble acoustique comprend une pluralité de modules acoustiques (800) placés côte à côte selon un même axe, et **en ce que** chaque capteur de l'antenne de focalisation (102) est agencé dans un module acoustique distinct de l'ensemble acoustique.

12. Système de localisation d'impulsion sonar (100) selon la revendication 11, **caractérisé en ce que** les capteurs d'un même tronçon de l'antenne de détection sont agencés dans un même module acoustique de l'ensemble acoustique.

13. Système de localisation d'impulsion sonar (100) selon l'une des revendications précédentes, **caractérisé en ce que** la formation de voies focalisées comprend au préalable :

    - l'application d'un retard grossier à chaque signal issu d'un capteur de l'antenne de focalisation, le retard étant déterminé à partir du numéro de capteur, de la distance inter-capteurs réelle, et de la distance angulaire de l'émetteur par rapport à l'axe formé par les capteur, et
    - l'application d'un retard fin à chaque signal issu d'un capteur de l'antenne de focalisation correspondant à la courbure du front d'onde, le retard fin appliqué à chaque signal étant déterminé à partir du numéro de capteur, de la distance inter-capteurs réelle, de la distance angulaire de l'émetteur par rapport à l'axe formé par les capteurs et de la distance de focalisation.

14. Système de localisation d'impulsion sonar (100) selon l'une des revendications précédentes, **caractérisé en ce que** l'antenne de détection (101) et l'antenne de focalisation (102) sont sensiblement alignées selon un même axe.

15. Procédé de localisation d'impulsion sonar (100) pour un sous-marin, **caractérisé en ce que** le procédé comprend les étapes consistant à :

    - prévoir deux antennes de forme générale linéaire (101, 102) agencées sur le sous-marin, les deux antennes comprenant une antenne de détection (101) comprenant un ou deux tronçons, chaque tronçon comprenant un ensemble de capteurs équirépartis, et une antenne de focalisation (102) comprenant un ensemble de capteurs équirépartis, l'antenne de détection (101) étant de petite dimension par rapport à la longueur de la deuxième antenne (102),'antenne de détection (101) étant alignée avec l'antenne de focalisation (102), l'espacement des capteurs de chaque tronçon de l'antenne de détection (101) étant strictement inférieur à $\lambda/2$, où A désigne la longueur d'onde du signal intercepté, et l'espacement des capteurs de l'antenne de focalisation (102) étant strictement supérieur à $\lambda$, l'antenne de détection (101) étant configurée pour intercepter des impulsions sonar (IS) émises par un émetteur (10),
    - déterminer la direction d'une impulsion sonar émise par un émetteur et interceptée par l'antenne de détection (101), et

déterminer la distance de l'émetteur par focalisation des voies à partir des signaux issus des capteurs de l'antenne de focalisation (102), dans la direction de l'impulsion déterminée par le module de détection (101).
la focalisation des voies étant réalisée sur une tranche temporelle de signal déterminée à partir du début et de la fin de l'impulsion dans un secteur angulaire autour de la direction de l'impulsion, la distance de l'émetteur étant déterminée à partir d'un maximum d'énergie intégrée dans la bande de fréquences et sur la durée de l'impulsion Sonar, pour des points dans l'espace distance/angle.

**Patentansprüche**

1. Sonar-Impulsortungssystem (100) für ein U-Boot, **dadurch gekennzeichnet, dass** es Folgendes umfasst:

- zwei allgemein lineare Antennen (101, 102), die auf dem U-Boot angeordnet sind, wobei die zwei Antennen eine Detektionsantenne (101) mit einem oder zwei Abschnitten, wobei jeder Abschnitt einen Satz von Sensoren umfasst, und eine Fokussierungsantenne (102) mit einem Satz von Sensoren umfassen, wobei die Detektionsantenne (101) im Verhältnis zur Länge der zweiten Antenne (102) eine geringe Abmessung hat, wobei die Detektionsantenne (101) mit der Fokussierungsantenne (102) ausgerichtet ist, wobei die Detektionsantenne (101) zum Abfangen von von einem Sender (10) ausgesendeten Sonarimpulsen konfiguriert ist, wobei der Abstand der Sensoren jedes Abschnitts der Detektionsantenne (101) strikt kleiner als $\lambda/2$ ist und der Abstand der Sensoren der Fokussierungsantenne (102) strikt größer als $\lambda$ ist, wobei $\lambda$ die Wellenlänge eines abgefangenen Impulses bezeichnet,
- mindestens ein Abfangmodul (51) zum Bestimmen der Richtung eines Sonarimpulses, der von dem Sender ausgesendet und von der Detektionsantenne (101) abgefangen wird, und
- ein Fokussierungsmodul (52) zum Bestimmen des Abstands des Senders durch Fokussieren der Kanäle auf der Basis der Signale von den Sensoren der Fokussierungsantenne (102) in der durch das Detektionsmodul (101) bestimmten Richtung des Impulses,

wobei die Fokussierung der Kanäle auf einem Signalzeitschlitz erfolgt, bestimmt auf der Basis von Anfang und Ende des Impulses in einem Winkelsektor um die Richtung des Impulses, wobei der Abstand vom Sender auf der Basis eines Maximums an in das Frequenzband integrierter Energie und über die Dauer des Sonarimpulses für Punkte im Abstands-/Winkelraum bestimmt wird.

2. Sonar-Impulsortungssystem (100) nach einem der vorherigen Ansprüche, **dadurch gekennzeichnet, dass** die Länge der ersten Antenne (101) strikt kleiner als $20\lambda$ ist, wobei $\lambda$ die Wellenlänge des abgefangenen Signals bezeichnet.

3. Sonar-Impulsortungssystem (100) nach Anspruch 2, **dadurch gekennzeichnet, dass** die Länge der zweiten Antenne (102) strikt größer als $200\lambda$ ist, wobei $\lambda$ die Wellenlänge des abgefangenen Signals bezeichnet.

4. Sonar-Impulsortungssystem (100) nach einem der vorherigen Ansprüche, **dadurch gekennzeichnet, dass** die Detektionsantenne (101) einen einzigen Abschnitt umfasst, der mit einem einzigen Abfangmodul (51) assoziiert ist.

5. Sonar-Impulsortungssystem (100) nach Anspruch 4, **dadurch gekennzeichnet, dass** sich die Detektionsantenne (101) im Wesentlichen in der Mitte der Fokussierungsantenne (102) befindet.

6. Sonar-Impulsortungssystem (100) nach einem der Ansprüche 1 bis 3, **dadurch gekennzeichnet, dass** die Detektionsantenne (101) zwei Abschnitte (1011, 1012) umfasst, die sich in einem gegebenen Abstand voneinander befinden, und dadurch, dass das Abfangmodul (51) zwei zusätzliche Abfangmodule (5101, 5102), die jeweils einen Winkelmesswert entsprechend dem assoziierten Antennenabschnitt liefern, und ein Mittelwertberechnungsmodul (53) umfasst, das zum Bestimmen des Mittelwerts von den 2 Winkelmessungen von den zusätzlichen Abfangmodulen (5101 und 5102) konfiguriert ist.

7. Sonar-Impulsortungssystem (100) nach Anspruch 6, **dadurch gekennzeichnet, dass** sich jeder Abschnitt der Detektionsantenne (101) im Wesentlichen an einem Ende der Fokussierungsantenne (102) befindet.

8. Sonar-Impulsortungssystem (100) nach einem der vorherigen Ansprüche 4 bis 7, **dadurch gekennzeichnet, dass** jedes mit einem Antennenabschnitt (101) assoziierte Abfangmodul einen zum Detektieren der Impulse im Beobachtungsfeld des Abschnitts der assoziierten Antenne (101) konfigurierten Detektor (510) und eine Funktion zum Messen der Kennwerte des erfassten Impulses (511) umfasst.

9. Sonar-Impulsortungssystem (100) nach Anspruch 8, **dadurch gekennzeichnet, dass** die Messfunktion (511) jedes Abfangmoduls zum Messen der Richtung und der Parameter des Impulses auf der Basis der erkannten Impulse konfiguriert ist.

10. Sonar-Impulsortungssystem (100) nach einem der vorherigen Ansprüche, **dadurch gekennzeichnet, dass** die Detektionsantenne (101) und die Fokussierungsantenne (102) in die akustischen Module einer selben akustischen Baugruppe integriert sind.

11. Sonar-Impulsortungssystem (100) nach Anspruch 10, **dadurch gekennzeichnet, dass** die akustische Baugruppe eine Mehrzahl von akustischen Modulen (800) umfasst, die Seite an Seite entlang einer selben Achse angeordnet sind, und dadurch, dass jeder Sensor der Fokussierungsantenne (102) in einem akustischen Modul getrennt von der akustischen Baugruppe angeordnet ist.

12. Sonar-Impulsortungssystem (100) nach Anspruch 11, **dadurch gekennzeichnet, dass** die Sensoren eines selben Abschnitts der Detektionsantenne in einem selben akustischen Modul der akustischen Baugruppe angeordnet sind.

13. Sonar-Impulsortungssystem (100) nach einem der vorherigen Ansprüche, **dadurch gekennzeichnet, dass** die Bildung von fokussierten Kanälen vorab Folgendes beinhaltet:

- Anwenden einer groben Verzögerung auf jedes Signal von einem Sensor der Fokussierungsantenne, wobei die Verzögerung auf der Basis der Sensornummer, des tatsächlichen Abstands zwischen den Sensoren und des Winkelabstands des Senders relativ zu der von den Sensoren gebildeten Achse bestimmt wird, und
- Anwenden einer feinen Verzögerung auf jedes Signal von einem Sensor der Fokussierungsantenne entsprechend der Krümmung der Wellenfront, wobei die auf jedes Signal angewandte feine Verzögerung auf der Basis der Sensornummer, des tatsächlichen Abstands zwischen den Sensoren, des Winkelabstands des Senders relativ zu der durch die Sensoren gebildeten Achse und des Fokussierungsabstands bestimmt wird.

14. Sonar-Impulsortungssystem (100) nach einem der vorherigen Ansprüche, **dadurch gekennzeichnet, dass** die Detektionsantenne (101) und die Fokussierungsantenne (102) im Wesentlichen entlang einer selben Achse ausgerichtet sind.

15. Sonar-Impulsortungsverfahren (100) für ein U-Boot, **dadurch gekennzeichnet, dass** das Verfahren die folgenden Schritte beinhaltet:

- Vorsehen von zwei allgemein linearen Antennen (101, 102), die auf dem U-Boot angeordnet sind, wobei die zwei Antennen eine Detektionsantenne (101) mit einem oder zwei Abschnitten, wobei jeder Abschnitt einen Satz von gleichmäßig verteilten Sensoren umfasst, und eine Fokussierungsantenne (102) mit einem Satz von gleichmäßig verteilten Sensoren umfasst, wobei die Detektionsantenne (101) relativ zur Länge der zweiten Antenne (102) eine geringe Abmessung hat, wobei die Detektionsantenne (101) mit der Fokussierungsantenne (102) ausgerichtet ist, wobei der Abstand der Sensoren jedes Abschnitts der Detektionsantenne (101) strikt kleiner als λ/2 ist, wobei λ die Wellenlänge des abgefangenen Signals bezeichnet, und wobei der Abstand der Sensoren der Fokussierungsantenne (102) strikt größer als λ ist, wobei die Detektionsantenne (101) zum Abfangen der von einem Sender (10) ausgesendeten Sonarimpulse (IS) konfiguriert ist,
- Bestimmen der Richtung eines Sonarimpulses, der von einem Sender ausgesendet und von der Detektionsantenne (101) abgefangen wird, und

Bestimmen des Abstands vom Sender durch Fokussieren der Kanäle auf der Basis der Signale von den Sensoren der Fokussierungsantenne (102) in der Richtung des vom Detektionsmodul (101) bestimmten Impulses,
wobei die Fokussierung der Kanäle auf einem Signalzeitschlitz erfolgt, bestimmt auf der Basis von Anfang und Ende des Impulses in einem Winkelsektor um die Richtung des Impulses, wobei der Abstand vom Sender auf der Basis eines Maximums an in das Frequenzband integrierter Energie und über die Dauer des Sonarimpulses für Punkte im Abstands-/Winkelraum bestimmt wird.

**Claims**

1. A system for sonar pulse location (100) for a submarine, **characterized in that** it comprises:

- two antennas of linear general shape (101, 102) arranged on the submarine, the two antennas comprising a detection antenna (101) comprising one or two segments, each segment comprising a set of sensors, and a focusing antenna (102) comprising a set of sensors, the detection antenna (101) being of small size with respect to the length of the second antenna (102), the detection antenna (101) being aligned with the focusing antenna (102), the detection antenna (101) being configured to intercept sonar pulses emitted by a transmitter (10), the spacing of the sensors of each segment of the detection antenna (101) being strictly less than λ/2 and the spacing of the sensors of the focusing antenna (102) being strictly greater than λ, λ designating the wavelength of an intercepted pulse,
- at least one interception module (51) for determining the direction of a sonar emission emitted by an emitter and intercepted by the detection antenna (101), and
- a focusing module (52) for determining the distance of the emitter by focusing the paths on the basis of the signals originating from the sensors of the focusing antenna (102), in the direction of the pulse determined by the detection module (101),

the focusing of the paths being carried out on a signal time slot determined from the beginning and the end of the pulse in an angular sector around the direction of the pulse, the distance from the emitter being determined on the basis of a maximum of energy integrated in the frequency band and over the duration of the Sonar pulse, for points in the distance/angle space.

2. The system for sonar pulse location (100) according to one of the preceding claims, **characterized in that** the length of the first antenna (101) is strictly less than 20λ, where λ designates the wavelength of the intercepted signal.

3. The system for sonar pulse location (100) according to claim 2, **characterized in that** the length of the second antenna (102) is strictly greater than 200λ, where λ designates the wavelength of the intercepted signal.

4. The system for sonar pulse location (100) according to one of the preceding claims, **characterized in that** the detection antenna (101) comprises a single segment, associated with a single interception module (51).

5. The system for sonar pulse location (100) according to claim 4, **characterized in that** the detection antenna (101) is located substantially at the center of the focusing antenna (102).

6. The system for sonar pulse location (100) according to one of claims 1 to 3, **characterized in that** the detection antenna (101) comprises two segments (1011, 1012) located at a given distance from each other, and **in that** the interception module (51) comprises two auxiliary interception modules (5101, 5102) each providing an angle measurement corresponding to the associated antenna segment, and an average-calculation module (53) configured to determine the average of the 2 angle measurements originating from the auxiliary interception modules (5101 and 5102).

7. The system for sonar pulse location (100) according to claim 6, **characterized in that** each segment of the detection antenna (101) is located substantially at one end of the focusing antenna (102).

8. The system for sonar pulse location (100) according to one of the preceding claims 4 to 7, **characterized in that** each interception module associated with a segment of the antenna (101) comprises a detector (510) configured to detect the pulses in the surveillance field of the segment of the associated antenna (101) and a function for measuring the characteristics of the detected pulse (511).

9. The system for sonar pulse location (100) according to claim 8, **characterized in that** the measurement function (511) of each interception module is configured to measure the direction and the parameters of the pulse on the basis of the detected pulses.

10. The system for sonar pulse location (100) according to one of the preceding claims, **characterized in that** the detection antenna (101) and the focusing antenna (102) are integrated into the acoustic modules of a same acoustic assembly.

11. The system for sonar pulse location (100) according to claim 10, **characterized in that** the acoustic assembly comprises a plurality of acoustic modules (800) placed side by side along the same axis, and **in that** each sensor of the focusing antenna (102) is arranged in an acoustic module distinct from the acoustic assembly.

12. The system for sonar pulse location (100) according to claim 11, **characterized in that** the sensors of a same segment of the detection antenna are arranged in a same acoustic module of the acoustic assembly.

13. The system for sonar pulse location (100) according to one of the preceding claims, **characterized in that** the formation of focused paths comprises beforehand:

- the application of a coarse delay to each signal originating from a sensor of the focusing antenna, the delay being determined on the basis of the sensor number, the real inter-sensor distance, and the angular distance of the emitter with respect to the axis formed by the sensors, and
- the application of a fine delay to each signal originating from a sensor of the focusing antenna corresponding to the curvature of the wave front, the fine delay applied to each signal being determined on the basis of the sensor number, of the real inter-sensor distance, the angular distance of the emitter with respect to the axis formed by the sensors and of the focusing distance.

14. The system for sonar pulse location (100) as claimed in one of the preceding claims, **characterized in that** the detection antenna (101) and the focusing antenna (102) are substantially aligned along the same axis.

15. A method for sonar pulse location (100) for a submarine **characterized in that** the method comprises the steps of:

- providing two antennas of linear general shape (101, 102) arranged on the submarine, the two antennas comprising a detection antenna (101) comprising one or two segments, each segment comprising a set of evenly distributed sensors, and a focusing antenna (102) comprising a set of evenly distributed sensors, the detection antenna (101) being of small size with respect to the length of the second antenna (102), the detection antenna (101) being aligned with the focusing antenna (102), the spacing of the sensors of each segment of the detection antenna (101) being strictly less than $\lambda/2$, $\lambda$ designating the wavelength of the intercept signal, and the spacing of the sensors of the focusing antenna (102) being strictly greater than $\lambda$, the detection antenna (101) being configured to intercept sonar pulses (IS) transmitted by an emitter (10),
- determining the direction of a sonar pulse transmitted by an emitter and intercepted by the detection antenna (101), and

determining the distance of the emitter by focusing the paths on the basis of the signals originating from the sensors of the focusing antenna (102), in the direction of the pulse determined by the detection module (101).
the focusing of the paths being carried out on a signal time slot determined from the beginning and the end of the pulse in an angular sector around the direction of the pulse, the distance of the emitter being determined on basis of a maximum of energy integrated in the frequency band and over the duration of the sonar pulse for points in the distance/angle space.

**FIGURE 1**

**FIGURE 2**

**FIGURE 3**

**100**

X source

10

θ   R

102   101   51   1020

Détecteur (510)

511

Fonction de calcul
(511)

FVT Focalisation
M cases distance,
direction θ   521

Mémoires tampon

11

Filtrage Fréquentiel   522

$R_\theta$ :Max   52

523

**FIGURE 4**

102

1011   1020   1012

Détecteur (510)   Détecteur (510)

Fonction de
calcul (511)   Module de calcul
de moyenne (53)   Fonction de
calcul (511)

5101   5102

Mémoires tampon   Module de
Focalisation (52)

11

**FIGURE 5**

**FIGURE 6**

102

80

800G   800   800C   101

1020   1010   800D

**FIGURE 7**

p

θ-π/2

p'

1020   3020

Antenne virtuelle

Y'   Y

O   x'   X'

δ

Front d'onde
sphérique

θ

Antenne réelle

X

Source à la
distance R

**FIGURE 8**

Déterminer tranche
temporelle (120)

A chaque signal k

Appliquer retards $T_k$ (121)

Appliquer retards fins (122)

Sommer les K+1 signaux
retardés (123)

Filtrer les signaux dans la
bande de l'IS (124)

sommer les énergies pendant
la durée de l'IS (125)

Déterminer le maximum
absolu des cases distance (126)

Position de la source (127)

**FIGURE 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- AU 2011265390

- US 3978445 A

**Littérature non-brevet citée dans la description**

- **QIHU LI.** Digital Sonar design in underwater acoustics. Springer Verlag, 2012